# EUROPEAN PATENT APPLICATION

(11) **EP 1 217 729 A2**
(43) Date of publication of application: **26.06.2002**
(21) Application number: 01309758.9
(22) Date of filing: 20.11.2001
(51) Int. Cl.: H03G 3/30

(54) **Broadcast data receivers and adaptive gain control thresholds to optimise received signal quality**

(30) Priority: 21.11.2000 GB 0028300
(71) Applicant: Pace Micro Technology PLC, Shipley, West Yorkshire BD18 3LF (GB)
(72) Inventor: Rowe, James, Shipley BD18 4HY (GB); Garrett, Peter, Baildon, Shipley BD17 5PY (GB)
(74) Representative: Wood, Graham

(57) **Abstract**

The invention relates to a method for optimising signal reception for a broadcast data receiver. Broadcast Data Receivers are used to receive digital data transmitted from a remote location, process the same and then generate video, audio and auxiliary services. However the Broadcast data receiver is typically located in a household and can be susceptible to general and/or local conditions which affect the reception of the data signals at different frequencies. The present invention provides a method for optimising the signal reception at the broadcast data receiver location by allowing the analysis of amplitude gain control levels of the broadcast data receiver and then selecting the amplitude gain control levels and/or other levels which optimise the quality of the received signal at each frequency.

## Description

The invention to which this application relates is to the use of amplitude gain control in the receiving and processing of digital and/or analogue radio frequency (RF) signals by broadcast data receivers. Broadcast Data receivers are typically used in conjunction with a television set and/ or the components thereof and can also be provided as an integral part thereof. The broadcast data receiver is provided to receive video and audio data carried on said analogue and digital signals, process the same and generate audio and or video for the television or radio programmes for the user. The programmes are typically carried on various selectable television channels and the data is carried on RF signals over a frequency range. The receiver typically includes one or a number of tuners which allow the receiver to tune to a particular frequency in response to a user selection of a particular channel.

The data and signals can be carried by any of a number of transmission media from the broadcaster to the receiver location such as satellite, cable or terrestrial system whereby the data is transmitted to all the broadcast data receivers at a large number of different locations.

The signal quality which is received can be affected by a number of influences depending on whether the signal is an analogue or digital signal and so action which is taken in respect of reducing interference for one signal at a first frequency may not be appropriate for another signal at another frequency. The alteration of the signal receiving components and parameters at the broadcast data receiver is typically achieved by the adjustment and control of the gain levels at the front end of the receiving means by (RF) amplitude gain control, and the gain at the end of the receiving components Intermediate Frequency (IF) gain control, and after filtering of the signal but prior to the demodulation of the data.

Direct conversion (or ZIF - zero intermediate frequency) satellite (and other) tuners often employ a multiplicity of Amplitude Gain Control (AGC) loops to cater for varying signal input level. Unlike a conventional (superheterodyne) tuner the ultimate channel filtering is performed very near the actual demodulation stage of the processing of the signal and removed from the antenna input as far as possible.

Further, there is usually no input tracking filter as part of the tuner. The result is that the RF amplifier, mixer IF (intermediate frequency) stages and A/D (analogue to digital converter) are subject to adjacent channel signal frequencies - often the whole transponder's content, and this can severely affect the quality of the selected signal frequency which is used for subsequent processing and generation of television programmes and, in due time, affect the quality of generation of the television programme for the user.

Optimum receiver performance is therefore dependent upon optimum gain distribution within the receiver, which is dependent not just upon the required signal quality, but also upon the rest of the signals visible to the various stages within the receiver.

Current AGC systems often involve the adjustment of AGC control in a manner which is purely determined by the level of the selected signal only. Some slightly more advanced systems have a wider band AGC detector that controls the wider band stages of the receiver, but both systems are set, typically under factory conditions at the time of manufacture and therefore do not provide optimum results for a given receiver installation location as they do not change from the factory setting. As the AGC loop characteristics are set at the stage of product design to balance between the conflicting requirements of 'single signal' environments and 'multiple signal' environments they can only, at best, be a compromise.

It should be noted that reference to receivers which receive signals via a particular transmission means are only given here as an illustration, and the invention as set out is equally applicable to any signal whose quality can be measured in a multi-signal environment (e.g. cable; terrestrial or satellite, digital and/or analogue television transmission systems.)

The aim of the present invention is therefore to provide apparatus and a method whereby the received signal quality can be optimised for each particular receiver and at a particular location and with respect to a particular channel.

In a first aspect of the invention there is provided a system for the generation of television programmes selected from a plurality of television channels said system including a broadcast data receiver, said receiver provided to receive any or any combination of analogue and /or digital data signals at a series of different frequencies, said signals carrying data which when received and processed by the receiver allows the generation of television programmes which are displayed to a user, said broadcast receiver including a tuner and first and second AGC's which allow the adjustment of first and second gain levels when receiving a signal and characterised in that, when a signal frequency is selected in response to the user selection of a television channel to be generated by the receiver, the receiver tunes to the required frequency, receives the signal and the receiver then adjusts the first and/or second gain levels to determine the appropriate gain levels which provide the optimum signal for that signal frequency with regard to predefined parameters.

Typically, the optimisation and setting of the gain control levels is performed for each new signal frequency selected when a new channel is selected by the receiver user.

Preferably the optimisation process is repeated either continuously or at regular intervals. This is the case even when the channel remains unchanged so as to take into account any alterations in conditions at the receiver or in the transmission system during the selection of said signal frequency.

Preferably the receiver includes storage means in which previously selected settings for receiving particular signal frequencies are stored. Thus, when that signal is again selected to be received, the receiver sets the receiving parameters in accordance with those stored in the storage means and then starts from those settings when subsequently checking to ascertain whether those settings are providing the optimum signal reception at that instant.

In one embodiment, at the time of factory setting of the receiver, standard settings may be input into the storage means to provide a starting point for each signal frequency from which the receiver tuner commences when the signal frequency is first chosen in use. Alternatively, upon the first selection of any frequency signal a series of common default settings are first referred to by the receiver.

In a further aspect of the invention there is provided a broadcast data receiver, said receiver provided to receive any or any combination of analogue and /or digital data signals, said signals transmitted at different frequencies within a frequency range, said signals carrying data which when received and processed by the receiver allows the generation of audio and video for television programmes which are displayed to a user via a television, said broadcast receiver including a tuner and first and second AGC's which allow the adjustment of first and second gain levels when receiving a signal and characterised in that when a signal frequency is selected in response to the user selection of a television channel to be generated by the receiver, the receiver tunes to the required frequency, receives the signal and the receiver then checks and, if necessary, adjusts the first and/or second gain levels to determine those appropriate gain levels which provide the optimum signal for that signal frequency at that instant.

Thus in accordance with the invention no prior knowledge of the parameter being analysed being analysed to indicate the optimisation of the signal quality, referred to as the metric, and such as the bit error rate BER, versus the control variable curve is required, other than it has a single optimum point and the invention provides for the dynamic control of the AGC characteristics of the multiplicity of AGC loops to optimise the received signal quality. In effect the receiver adapts to a particular receiver installation and adapts the signal receiving means to suit the particular location and hence provide the optimal signal reception characteristics on a signal by signal basis.

Typically, in a receiver provided to receive digital signals, the signal quality can be measured with reference to the demodulator error correcting circuitry in the receiver and requires no human intervention. In one embodiment an algorithm can be used to 'pick the best from N options' or in an alternative embodiment a complex multidimensional parameter maximisation search is adopted (or any step in between).

An alternative method of optimisation is to use a combination of the principles of 'fuzzy logic' and non-linear filters.

In one embodiment the optimisation can be determined with respect to a particular value or characteristic, or metric, such as a bit error rate (BER), by altering the AGC values and hence arriving at the AGC value or values which provide the optimal signal quality at a particular frequency.

This method can cope with a very noisy metric, even one suffering from impulsive noise, and the possibility of the optimum settings changing over time.

This robustness is achieved by a combination of modern signal processing methods, namely non-linear filtering and fuzzy logic. It is computationally less expensive to implement than a traditional control approach to the same problem, and also has uses outside the broadcast data receiver in relation to which it is herein described.

In one embodiment the broadcast data receiver is provided with default AGC settings with respect to which the receiver operates when first rendered operational. Once operational, the method is employed to adapt the operating characteristics with respect to signal affecting factors at the location of the broadcast data receiver.

In a yet further aspect of the invention there is provided a method for receiving a data carrier signal selected from one of a range of signal frequencies, said data, once received, processed and used to generate video and audio for a television or radio programme by a broadcast data receiver connected to a display screen and speakers, said method comprising receiving a user selection of a particular television channel via the broadcast data receiver, identifying the signal frequency for that channel and tuning the receiver utilising a tuner to receive the frequency signal, and characterised in that upon signal frequency reception adjusting at least first and second amplitude gain control levels and assessing the change in signal quality, said quality determined with respect to predefined parameters, and, upon identifying the optimum signal maintaining those amplitude gain control levels.

Typically upon selecting signal frequency reference is made to a storage means in which previous amplitude gain control levels for that signal frequency are held and which are utilised as the first settings for the signal frequency reception.

Preferably the method according to claim 16 characterised in that the method is repeated for every new frequency signal selection or is repeated continuously while the broadcast data receiver is operational.

Specific embodiments of the invention are now described with reference to the accompanying figure; wherein
Figure 1 illustrates a circuit of a broadcast data receiver tuner with Radio Frequency (RF) and Intermediate Frequency (IF).amplitude gain controls;
Figure 2 illustrates the circuitry for a further embodiment of a tuner incorporating a wideband RF amplitude gain control means;
Figure 3 illustrates a quality curve for the reception of a frequency signal with respect to a metric value against a control variable;
Figure 4 illustrates a portion of the curve of Figure 3
Figure 5 illustrates one embodiment of a fuzzy logic decision block in accordance with one embodiment of the invention;
Figure 6 illustrates the inputs for the fuzzy logic decision block;
Figure 7 illustrates one embodiment of the fuzzy rules table ; and
Figure 8 illustrates the output membership of the fuzzy logic decision block.

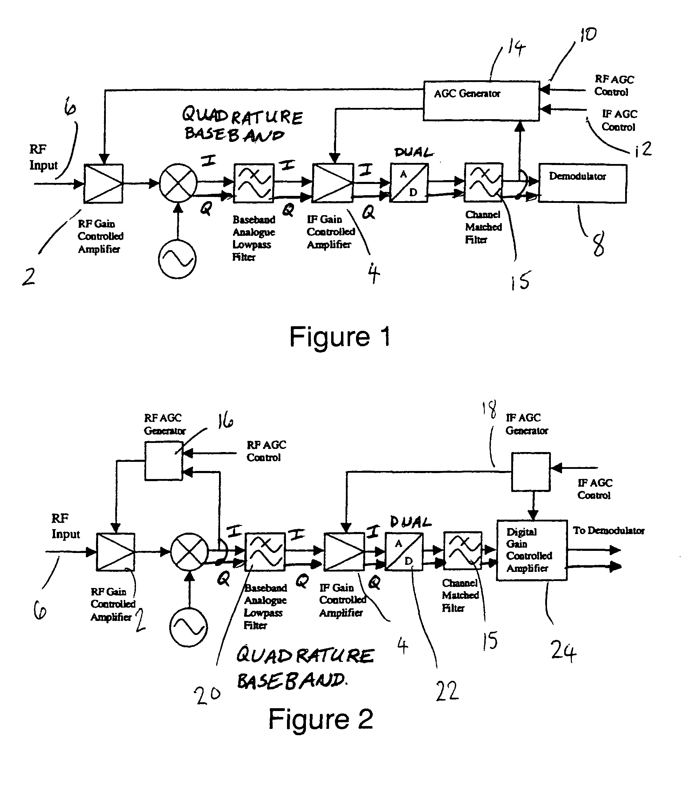

Referring firstly to Figures 1 and 2, when a broadcast data receiver is initially tuned to receive a particular signal frequency to receive data for a user selected television channel the tuner uses default AGC settings, typically set at the time of manufacture. Conventionally, these default settings would continue to be used if the current invention was not employed in the following manner.

In accordance with the invention, once the signal frequency is acquired as the input 6 and as it passes through the tuner to the demodulator 8 for subsequent processing of the data carried thereon, the adaptive nature of the system comes into effect in terms of the RF and IF amplitude gain values at the amplifiers 2,4 respectively and which are respectively controlled by the RF AGC and IF AGC controls 10,12 via the AGC generator 14.

The AGC levels for the respective RF and IF AGC which are allocated to provide optimal signal quality are dependent upon the particular signal frequency selected and the surrounding "environment conditions" for that signal. For instance, if there are larger signal data carriers at adjacent frequencies to the selected signal frequency which may cause interference, it is better to have a higher level IF gain in the base band after some initial filtering. However, if the selected signal is larger or closer to the noise floor then a higher RF gain level is better. So the exact optimum gain levels and relative gain levels is largely dependent upon many external factors and, it will be appreciated, varies from frequency signal to frequency signal.

In accordance with the invention therefore, the quality of the selected signal is maximised using a process which is effective once the signal is selected and utilises manipulation of the RF and IF gain levels and distribution. In the simplest example illustrated there are two (or more) predefined gain balances and the best gain balance is chosen based upon the level of the received signal data bit error rate (BER) in terms of a digital data signal.

A more complex case involves a two dimensional search in 'AGC space' to minimise the BER. In this case if there are more than two AGC levels then the dimensions to be searched also increase.

The Figure 1 illustrates a typical tuner which can be used in a broadcast data receiver and the circuit diagram is representative of the current generation of tuners. These tuners suffer from a disadvantage when it comes to multiple signal frequency handling because the channel filtering 15 is near the end of the signal frequency processing chain, so previous stages are exposed to unwanted, uncooperative signals. Dynamic optimisation of the selected signal quality improves the operational margin of the receiving system, so any further system degradation can be better tolerated. In use, adjustment of the AGC threshold control voltages changes the balance of the gain distribution between the RF and IF gain controlled stages 2,4 to optimise performance for the particular signal frequency situations found when the same are selected.

A more advanced tuner is illustrated in Figure 2. Here, there is a separate wideband AGC loop 16 for the RF gain controlled amplifier and a loop 18 for the IF AGC control. This is better than the previous tuner because the gain of the RF stage is controlled by the total number of signals present in the RF stage, and not just by the selected signal. However, the baseband filter 20 is still not matched to the signal and energy from adjacent signal frequencies may well appear at the input of the analogue to digital converter 22, reducing the number of data bits available for the selected signal.

If the baseband IF gain 18 is controlled by the power in the selected signal 6 then the system performance will be sub-optimal in the presence of strong adjacent frequency signals, i.e. the gain of the baseband amplifier 4 should be such as not to overload the A to D converter 22 and any additional gain made up for in the digital gain controlled stage 24. Thus in accordance with the invention the control system automatically checks the actual operating characteristics and if it detects that there are strong adjacent signals to the selected signal, it will alter the operating parameters as described and thereby optimise the data generated from the selection of the frequency signal

However, if, upon checking, the system finds that there are no significant adjacent frequency signals then it is better to maximise the baseband IF gain 22 to make best use of the available data bits and so a different setting will be set for the AGC control levels for that particular selected signal.

Thus, in accordance with the invention, the system and optimisation method is applied at least for every selection of a frequency signal in response to a user channel selection at the broadcast data receiver and preferably continuously or periodically refreshed for best performance during the reception of a particular frequency signal. Also, it is advantageous to learn and store the optimal settings for a given frequency and band which will then act as the new default setting for the frequency signal when it is next selected. However the system and method will still be employed but the resulting search effort required on reacquisition of a previously selected signal frequency is reduced.

If a multidimensional 'AGC space' search algorithm is employed then the area of search may have to be restricted to certain bounds to avoid false peaks in the signal quality.

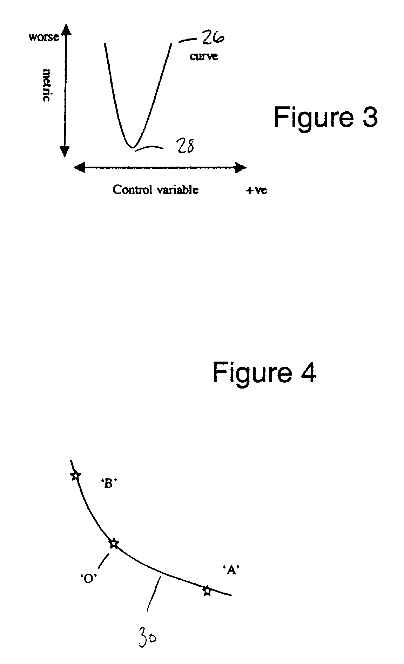

Referring now to Figures 3-8 a more detailed example of a method and system which can be used to optimise a frequency signal is described. In this case a satellite transmission system installation is provided and is found to be operating in a sub optimal manner, perhaps due to poor reception and/or a wide variation of frequency signal levels within the 'visible' frequency range. The invention allows this system to be more tolerant of further signal degradations (e.g rainfall) upon satisfactory operation of the receiver system.

The optimum point of operation at a selected frequency signal is the minima 28 of a metric curve 26, see Figure 3. A portion 30 of the curve of Figure 3 is shown in Figure 4 and the normal operating value of the control variable is shown by the point 'O'. The gradient around this point shows which way to change the control variable to get closer to the optimum i.e the minima of the curve. As the gradient reduces, the amount by which the control variable should be changed should also reduced so that the optimum point is not stepped over.

A simple way of getting the curve gradients is to alter the control variable value, and after the change has had an effect, re-measure the metric. This is done for a point below O in value, point 'B', and above O in value, point 'A'. There is now enough information to calculate the gradients, which can be performed in a conventional manner. Both gradients can be evaluated in the same sense, i.e. with respect to the positive direction of the control variable. If the offset between 'O' and 'B', and that between 'O' and 'A' are the same, then a value proportional to the gradient can be obtained by dividing the metric value at 'B' by that at 'O', and that at 'O' by 'A'. The overhead here would be choosing the order in which to do the divisions (always larger divided by smaller), and the application of a sign as required by the fuzzy logic rules.

These gradient samples will be noisy. The filtering inherent in fuzzy logic will take care of Gaussian noise, but if the metric suffers from impulsive noise, the gradient samples could be misclassified in the fuzzification operation. Just taking an average of several gradient samples, or using a digital filter, could still result in a very unrepresentative value as an impulsive noise event could give a metric measurement that is so far from optimum, it takes a while to 'de-accumulate' from the filter.

In accordance with the invention, this "spiky or impulsive" noise is removed by using a median filter, a form of non-linear filter, wherein a series of samples are ranked in numerical order, and the middle value is chosen as representative.

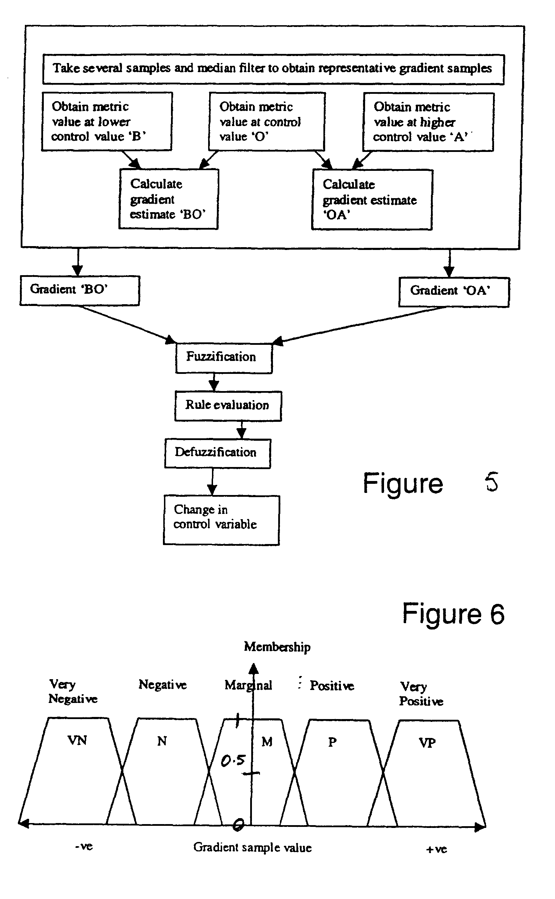

To illustrate, if there are 5 samples, sample 3 of the ranked samples would be the representative one as illustrated in Figure 6, and the filtered gradient samples can now be passed to the final stage of the method.

A standard fuzzy logic block as shown in Figure 5, can be used to process the gradient samples and the input membership functions should take the form of Figure 6. It is not recommended to reduce the number of classes, but more could be added for increased accuracy, at the expense of more computational effort if required.

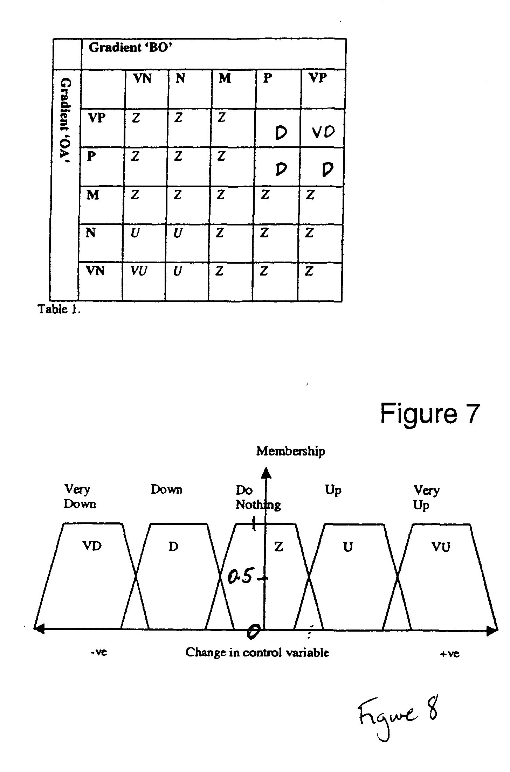

The fuzzy logic rules which can be followed are illustrated in Figure 7 and keep this form even when the numbers of input and/or output classes are increased. The codes used are;
VU= Very Up
U=Up
Z = Do Nothing
D=Down
VD=Very Down

For the example given, the top-left 4 entries should never occur (as these refer to a maximum in the curve) and that is why they have 'do nothing' rules associated with them.

In the table the Gradient 'BO' is the gradient estimate from point 'B' to 'O', similarly for Gradient 'OA'. Columns and row headings are from the input membership functions and the Figure table entries refer to the output membership functions shown in Figure 8. In one embodiment, symmetric membership functions can be used, as this is computationally less demanding. The subsequent adjustments to the parameters, such as the AGC control levels which are made are made in dependence on the Change indications from the Figures 7 and 8 with respect to the Bit Error Rate of the selected signal frequency.

This approach means that no prior knowledge of the shape of the measured metric vs. control value is required, indeed, it is designed to work in situations where this curve changes with time (as other uncontrolled, and possibly uncontrollable, variables change). It can cope with this metric being noisy, and even suffering from impulsive noise, and is less computationally expensive than traditional control methods due to the implicit filtering in fuzzy logic and a median filter being simple to implement. The digital filters required in a traditional scheme would be computationally expensive.

The invention although described with reference to the method to optimise the AGC take-over point against the measured metric of the bit error rate (BER) for a demodulator and which gives the best BER depending on whether it was limited by the tuner noise-figure, adjacent channel interference or intermodulation products (Ips), can be extended to several other control loops within a product, e.g setting the correct black level. All of these have metric vs. control value curves that are non-constant, and have noisy metrics.

## Claims

1. A system for the generation of television programmes selected from a plurality of television channels said system including a broadcast data receiver, said receiver provided to receive any or any combination of analogue and /or digital data signals at a series of different frequencies, said signals carrying data which when received and processed by the receiver allows the generation of television programmes which are displayed to a user, said broadcast receiver including a tuner and first and second AGC's which allow the adjustment of first and second gain levels when receiving a signal and **characterised in that**, when a signal frequency is selected in response to the user selection of a television channel to be generated by the receiver, the receiver tunes to the required frequency, receives the signal and the receiver then adjusts the first and/or second gain levels to determine the appropriate gain levels which provide the optimum signal for that signal frequency with regard to predefined parameters.

2. A system according to claim 1 **characterised in that** the optimisation and setting of the gain control levels is performed for each new signal frequency selected when a new channel is selected by the receiver user.

3. A system according to claim 1 **characterised in that** the optimisation process is repeated at regular intervals.

4. A system according to claim 1 **characterised in that** the setting of the AGC levels is checked continuously.

5. A system according to claim 1 **characterised in that** the receiver includes storage means in which previously selected settings for particular signal frequencies are stored and which are referred to when that signal is again selected to be received, with the receiver setting the receiving parameters in accordance with those stored in the storage means and then starts from those settings when subsequently checking to ascertain whether those settings are providing the optimum signal reception at that instant.

6. A system according to claim 5 **characterised in that** at the time of factory setting of the receiver standard settings may be input into the storage means to provide a starting point for each signal frequency from which the receiver tuner commences when the signal frequency is first chosen in use.

7. A system according to claim 1 **characterised in that** upon to the first selection of any signal frequency a series of common default settings are referred to by the receiver.

8. A system according to claim 1 **characterised in that** the signal quality is determined with reference to the demodulator error correcting circuitry in the receiver.

9. A system according to claim 1 **characterised in that** the signal quality and optimisation process is determined with respect to the Bit Error Rate for the signal frequency.

10. A system according to claim 9 **characterised in that** the bit error rate is adjusted by altering the first and second values of the amplitude gain values and hence arriving at the AGC value or values which provide the optimal signal quality at a particular signal frequency.

11. A broadcast data receiver, said receiver provided to receive any or any combination of analogue and /or digital data signals, said signals transmitted at different frequencies within a frequency range, said signals carrying data which when received and processed by the receiver allows the generation of audio and video for television programmes which are displayed to a user via a television, said broadcast receiver including a tuner and first and second AGC's which allow the adjustment of first and second gain levels when receiving a signal and **characterised in that** when a signal frequency is selected in response to the user selection of a television channel to be generated by the receiver, the receiver tunes to the required frequency, receives the signal and the receiver then checks and, if necessary, adjusts the first and/or second gain levels to determine those appropriate gain levels which provide the optimum signal for that signal frequency at that instant.

12. A receiver according to claim 11 **characterised in that** the signal quality for each AGC level is measured by demodulator error correcting circuitry in the broadcast data receiver.

13. A receiver according to claim 11 **characterised in that** the value which is measured is subject to control alterations to the broadcast data receiver.

14. A receiver according to claim 11 **characterised in that** there are two or more amplitude gain control loop levels and the alterations made to each are based upon that which provides the lowest received signal bit error rate (BER) for each.

15. A receiver according to claim 11 **characterised in that** receiver implements a two dimensional search in the amplitude gain control range to minimise the BER.

16. A method for receiving a data carrier signal selected from one of a range of signal frequencies, said data, once received, processed and used to generate video and audio for a television or radio programme by a broadcast data receiver connected to a display screen and speakers, said method comprising receiving a user selection of a particular television channel via the broadcast data receiver, identifying the signal frequency for that channel and tuning the receiver utilising a tuner to receive the frequency signal, and **characterised in that** upon signal frequency reception adjusting at least first and second amplitude gain control levels and assessing the change in signal quality, said quality determined with respect to predefined parameters, and, upon identifying the optimum signal maintaining those amplitude gain control levels.

17. A method according to claim 16 **characterised in that** upon selecting signal frequency reference is made to a storage means in which previous amplitude gain control levels for that signal frequency are held and which are utilised as the first settings for the signal frequency reception.

18. A method according to claim 16 **characterised in that** the method is repeated for every new frequency signal selection.

19. A method according to claim 16 **characterised in that** the method is repeated continuously while the broadcast data receiver is operational.
